# EUROPEAN PATENT SPECIFICATION

(11) **EP 4 058 321 B1**
(45) Date of publication and mention of the grant of the patent: **21.10.2026**
(21) Application number: 20820722.5
(22) Date of filing: 13.11.2020
(51) Int. Cl.: B60L 53/18, G01M 3/18, H01B 7/32, H01B 7/42

(54) **LEAK DETECTION IN A CABLE ASSEMBLY**
LECKDETEKTION IN EINER KABELANORDNUNG
DÉTECTION DE FUITE DANS UN ENSEMBLE CÂBLE

(30) Priority: 15.11.2019 US 201962936254 P
(43) Date of publication of application: 21.09.2022
(73) Proprietor: Tesla, Inc., Austin, TX 78725 (US)
(72) Inventor: FORTIN, Pascal-Andre, Austin, Texas 78725 (US); SUKUP, Martin James, Austin, Texas 78725 (US); MURPHY, Tim, Austin, Texas 78725 (US); CHOU, Chuen, Austin, Texas 78725 (US); TEDJARATI, Aria, Austin, Texas 78725 (US)
(74) Representative: Liesegang, Eva
(86) International application number: PCT/US2020/060528
(87) International publication number: WO 2021/097298

(56) References cited:
- WO-A1-2018/231108
- DE-A1- 102016 118 193
- FR-A1- 3 011 075
- ANONYMOUS: "Voltage divider - Wikipedia", WIKIPEDIA, 20 August 2018 (2018-08-20), XP055771510, Retrieved from the Internet <URL:https://en.wikipedia.org/wiki/Voltage_divider> [retrieved on 20210202]

## Description

### INCORPORATION BY REFERENCE TO ANY PRIORITY APPLICATIONS

This application claims the benefit of priority to U.S. Provisional Patent Application No. 62/936,254, filed November 15, 2019 and entitled "LEAK DETECTION IN A CABLE ASSEMBLY".

### BACKGROUND

The advancement of electric vehicles has created an increased need for charging equipment that delivers electric power to rechargeable batteries of the vehicles. Some such applications, such as high current, fast-charging vehicle chargers, are designed to work with continuous currents of 350 amps or more. To transfer energy more quickly and decrease charging times, the cable assembly (including cable and charging connector) should be capable of withstanding high current loads. Generally, the higher the current flow that passes through the charging equipment, the more heat is generated.

To mitigate the problem of excessive heat generation, the cross section of the current carrying conductor may be increased to reduce loss. However, such an increase in cross section requires an increased cable cross section, which makes the cable difficult to handle. Alternatively, the cable assembly may include a cooling conduit disposed near the conductors. The cooling conduit may carry a coolant fluid that can take away some or all of the heat generated in the conductors. However, the presence of the coolant fluid in the cable assembly poses new problems. For example, the coolant fluid may leak from the cooling conduit and may come in contact with electrical conductors, or a shield of the cable assembly. This may result in damage to the cable as well as to the charging equipment and the vehicle.

DE 10 2016 118 193 A1 discloses a cable assembly for conducting an electric current, wherein the cable assembly comprises a pair of electrically conductive sensing wires that are arranged adjacent to a cooling conduit in the cable assembly and configured to detect a change in conductivity within the cable assembly.

WO 2018/231108 A1 discloses a moisture detection system comprising a cable, a voltage regulator and a differential amplifier, wherein the cable comprises an elongated nonconductive moisture permeable structure as well as a first elongated lead and a second elongated lead, which are connected to the differential amplifier for determining a voltage difference between the first and second leads.

FR 3 011 075 A1 describes a device for detecting leaks in a liquid transport or storage member.

### SUMMARY

The present disclosure provides a cable assembly according to claim 1. Examples thereof are detailed in the dependent claims.

The present disclosure relates to a cable assembly. In one embodiment, the cable assembly includes a cable having a first end and a second end. The cable has electric conductors and cooling conduits, each of which extends from the first end to the second end of the cable. The cooling conduit is adapted to convey a fluid that cools the electric conductor. In this embodiment, the cable assembly includes a leak detection module to detect a fluid leak from the cooling conduit. The leak detection module includes a power source to generate an input voltage signal which is applied to the fluid at a first monitor node that is located within the cooling conduit and contacts with the fluid. The input voltage signal is applied to the fluid through a resistance. The leak detection module includes a controller to monitor an output voltage signal at the monitor node and to detect a leak of the fluid from the cooling conduit based on changes detected from the output voltage signal.

In some embodiments of the present invention, a cable assembly having a fluid-cooled cable is provided. The cable has a first end and a second end. The cable includes one or more electric conductors and a cooling conduit, each of which extends from the first end to the second end. The cooling conduit is adapted to convey a fluid that cools the electric conductor. The cable assembly includes a connector attached to the second end of the cable. The cooling conduit forms a fluid channel around inside a handle of the connector and is adapted to cool the connector. The cable assembly includes a leak detection module coupled to the cable and the connector. The leak detection module includes a power source to generate an input voltage signal wherein the input voltage signal is applied to the fluid at a first monitor node that is located within the cooling conduit and contacts with the fluid. The input voltage is applied to the fluid through a resistance. The leak detection module includes a controller to monitor an output voltage signal at the first monitor node and to detect a leak of the fluid from the cooling conduit based on detected changes to the output voltage signal.

### BRIEF DESCRIPTION OF THE DRAWINGS

FIG. 1 illustrates exemplary connector and cable as part of a cable assembly, according to certain embodiments of the present disclosure.
FIG. 2 schematically illustrates an example of a leak detection module for the cable assembly, according to certain embodiments of the present disclosure.
FIG. 3 illustrates exemplary voltage waveforms at various nodes of the leak detection module, according to certain embodiments of the present disclosure.
FIG. 4 illustrates an exemplary cross section of the cable assembly, according to certain embodiments of the present disclosure.
FIG. 5 illustrates a perspective view of the connector, according to certain embodiments of the present disclosure.

Embodiments of the present disclosure and their advantages are best understood by referring to the detailed description that follows. It should be appreciated that like reference numerals are used to identify like elements illustrated in one or more of the figures, wherein showings therein are for purposes of illustrating embodiments of the present disclosure and not for purposes of limiting it.

### DETAILED DESCRIPTION

The following detailed description of embodiments presents various descriptions of specific embodiments of the invention. However, the invention can be embodied in a multitude of different ways. In this description, reference is made to the drawings where like reference numerals may indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings.

Generally described, one or more aspects of the present disclosure relate to cable assemblies including leak detection modules. Illustratively, a leak detection module may allow detection of a leak of a coolant fluid in a cable assembly used for charging electric vehicles. Upon detecting the leak, the leak detection module may alert a user such that the user stops using the cable to charge the vehicle. In some configurations the leak detection module may automatically stop the power supply connected to the cable assembly from providing power to the cable. Thus, leak detection may help in avoiding faults in cable assemblies that may arise due to contact between coolant fluid and the electrical conductors and increase the safety of using such cable assemblies. Although various aspects of the cable assembly are described in an environment of charging of electric or hybrid vehicles, the cable assembly may also be used in any other application area which may allow use of such a fluid-cooled cable.

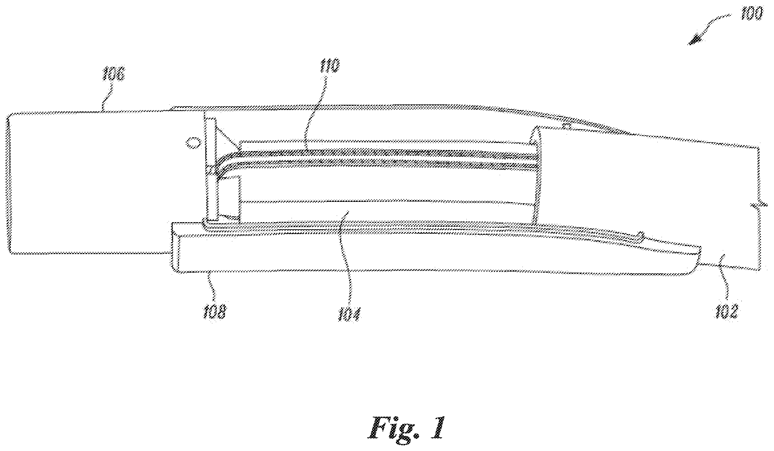

FIG. 1 illustrates an example of a charger assembly 100 having a cable 102 that runs laterally through the assembly 100. The cable 102 may have at least one electrical conductor 104 that is configured for transferring electric power. In some embodiments, the cable 102 may terminate in a connector tip 106 that is connected to a connector housing 108 (part of which is here removed for visibility). The connector tip 106 may be designed to be compatible with a power inlet and may therefore be configured according to one or more standards for electric connectors. The cable 102 may form the connection between the connector tip 106 and a power supply (e.g., a generator or an electric grid). The cable 102 may have a first end and a second end such that the first end of the cable 102 is coupled to the power supply and the second end is coupled to the connector tip 106. In some embodiments, the connector tip 106 and the connector housing 108 may be manufactured as a single piece. In other embodiments, the connector tip 106 and connector housing 108 may be manufactured as separate pieces.

A handle (not shown) may partially, or fully, enclose the connector tip 106 and/or the connector housing 108. The handle may also partially enclose the cable 102. The handle may be designed to be held by a person, such as when inserting the connector tip 106 into the power inlet, and when removing the connector tip 106 from the power inlet.

In certain embodiments, the charger assembly 100 may be used for charging an electric vehicle or a hybrid-electric vehicle. The electric vehicle may include an electric powertrain (not shown) for propelling the vehicle over a ground surface. The electric vehicle may include an energy storage device (not shown) for supplying energy to electric powertrain for propelling the electric vehicle. The energy storage device may be a collection of one or more battery cells. In some embodiments, the energy storage device may be any other energy storage means which may be suitable for application with various aspects of the present disclosure. The electric vehicle may include a charging inlet configured to receive the connector tip 106 in an inlet or receptacle for charging the energy storage device. The charging inlet may be internally connected to an energy storage device such that electrical energy may be supplied through the charging inlet to the energy storage device. In some embodiments, the charging inlet may interlock with the connector tip 106 such that the cable 102 may be secured without support from a person.

The cable 102 may include a cooling conduit 110. The cooling conduit 110 may serve to convey a fluid (e.g., a coolant) along the length of the conductor 104 so as to remove some or all of the heat generated by the flow of electrical energy within the conductor 104. Examples of such fluids or other heat transfer mediums may include, but are not limited to, water, air, oil, phase-changing materials, and other chemicals. For example, a non-degrading fluid can be chosen that has sufficient heat capacity to cool the conductor 104. The material for the cooling conduit 110 may be chosen based on its thermal conductivity, flexibility, and durability.

In some embodiments, the cooling conduit 110 may begin at the first end of the cable 102 at or near the power supply, and double back at or near the connector tip 106 to return to the first end of the cable 102. In such embodiments, the cooling conduit 110 may be a single tube such that the fluid travels along the same path in both directions. The fluid may be pumped from the first end of the cable 102 toward the connector tip 106, stored in an internal receptable at or near the connector tip 106 until all the fluid is in the receptable, then pumped back from the connector tip 106 toward the first end of the cable 102. In other embodiments, the cooling conduit 110 may have a U-turn at or near the connector tip 106 to reverse the flow direction of the fluid. With this and similar implementations, the cooling conduit 110 can provide continuous, circulating cooling along essentially the entire length of the cable 102 and within the connector tip 106. As such, the fluid can be returned to a system that provides the fluid, such as a reservoir of a cooling system. The path of the fluid may thus be circular, flowing on one side of the cable 102 toward the connector tip 106 and flowing on a different side of the cable 102 toward the reservoir. In certain embodiments, the U-turn can occur outside of the connector tip 106. For example, in an implementation where the fluid is fed into an electric vehicle during charging so as to provide cooling during the charging operation, the fluid can come out of the vehicle through the same connector tip 106 via the U-turn. In other implementations, a one-way flow of the fluid can be provided. For example, the connector tip 106 that attaches to the charging inlet of the electric vehicle (or other equipment) can also have a fluid inlet that is coupled to a fluid reservoir of the vehicle. As such, this arrangement may be used to replenish fluid in the fluid reservoir of the vehicle. In other embodiments, the fluid may flow from the cable 102 into the vehicle, and then return back from the vehicle to the beginning of the cable.

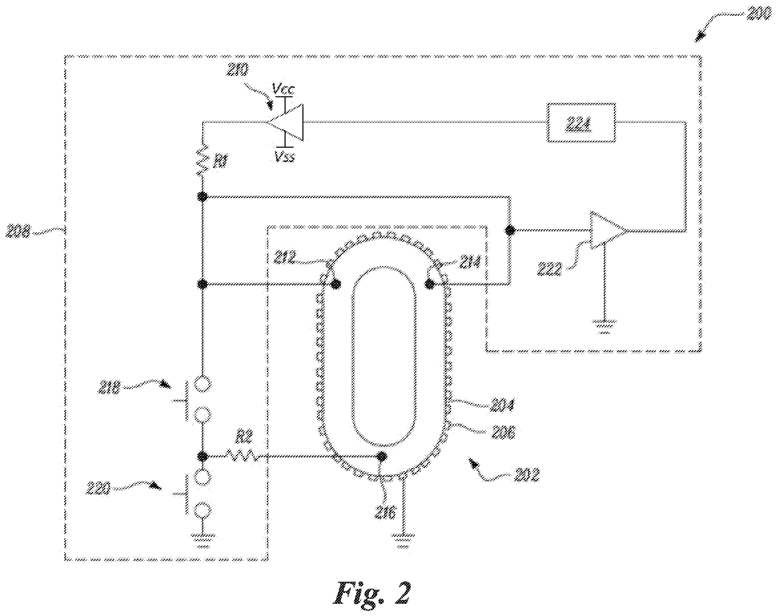

FIG. 2 schematically illustrates a leak detection system of a cable assembly 200, according to certain embodiments of the present disclosure. The cable assembly 200 may include a cable 202 having a cooling conduit 204 (shown in cross section). The cable 202 may be covered by a shield 206 which is connected to ground. The cable assembly 200 may include an electronic leak detection module 208 that is programmed and configured to detect a leak of the fluid from the cooling conduit 204. The leak detection module 208 may monitor changes in one or more electrical properties of the fluid circulating in the cooling conduit 204 to detect the leak. For example, changes in fluid electrical properties may occur if the leaked fluid comes into contact with a low voltage source (e.g., ground conductor or the shield 206) or a high voltage source (e.g., high voltage conductor).

With continued reference to FIG. 2, the leak detection module 208 includes a power source 210 that generates an input voltage signal to be applied to the fluid. In some embodiments, the power source 210 may generate an alternating current (AC) voltage signal that alternates between a maximum voltage (Vcc) and a minimum voltage (Vss). In other embodiments, the power source 210 may generate a direct current (DC) voltage signal of a predefined voltage. The input voltage signal is applied to the fluid through a resistance R1 as shown in FIG. 2. In some embodiments, resistance R1 may be an impedance from a resistor. In other embodiments, resistance R1 may be an impedance from other electrical components. For monitoring the electrical properties of the fluid, one or more monitor nodes 212, 214 are defined at predetermined locations within the cooling conduit 204. The one or more monitor nodes 212, 214 are in contact with the fluid and polarize the fluid when the input voltage signal is applied to the nodes 212, 214. Use of two nodes, as opposed to only a single monitoring node, may improve redundancy and provide greater contact to polarize the fluid. However, it should be realized that only one node may be used within the scope of the present invention, and that two nodes are not required to monitor the electrical properties of the fluid. Locations of the monitor nodes 212, 214 may be selected so as to create an optimal geometry for monitoring the electrical properties of the fluid while minimizing the distance between the nodes 212, 214. In some embodiments, only one of the monitor nodes 212, 214 may be used to polarize the fluid and monitor the electrical properties of the fluid.

A test node 216 (shown in FIG. 2) may be provided in some embodiments to simulate a leak of the fluid via a resistance R2. In some embodiments, resistance R2 may be an impedance from a resistor. In other embodiments, resistance R2 may be an impedance from other electrical components. The resistance R2 may be connected to one or more switches 218, 220 that allow the resistance R2 to alternate connection between the leak detection module 208 and ground. As detailed herein, changing the resistance R2 connections may cause the leak detection module 208 to alternate between a self-check mode and a normal operation mode.

Referring to FIG. 2, the leak detection module 208 may include a buffer 222 connected with the monitor nodes 212, 214 and ground. The buffer 222 may monitor the output voltage signal at the nodes 212, 214. The impedance of the fluid may act as a voltage divider between the power source 210 and ground.

The leak detection module 208 may include a controller 224 to detect a leak of the fluid from the cooling conduit 204. The controller 224 may receive the input voltage signal from the power source 210. Further, the controller 224 may receive the output voltage signal from the buffer 222. In some embodiments, the buffer 222 may be implemented within the controller 224. The controller 224 may determine a voltage associated with the output voltage signal, such as a peak-to-peak output voltage or a maximum output voltage. To detect the leak, the controller 224 may monitor decay of the output voltage, the peak-to-peak output voltage, or the maximum output voltage of the output voltage signal. In some embodiments, the controller 224 may repeatedly compute changes in the amplitude of the output voltage signal by computing a difference between the amplitudes measured after a fixed time interval (e.g., 5 seconds). The controller 224 may identify a leak when the measured amplitude (e.g., peak-to-peak output voltage or the maximum output voltage) drops by more than a predetermined threshold voltage drop. In one embodiment, the threshold value may be chosen sufficiently high such that small variations in the peak-to-peak voltage or the maximum voltage are not detected as a leak of the fluid.

The controller 224 may generate an indication of the leak for a user or an operator of the cable assembly 200. The indication may be a visual indication, an audio indication, or a tactile indication. Upon receiving the indication, the user may stop the transfer of electrical power through the cable assembly 200 to avoid any faults and minimize the associated risks. In some embodiments, the controller 224 may automatically take an action (e.g., stop the charging of the electric vehicle) upon detecting the leak.

In some embodiments, the leak detection module 208 may operate in one of a self-check mode and a normal operation mode. As shown in FIG. 2, switches 218, 220 may be provided to switch between the self-check mode and the normal operation mode by changing the connections of the resistance R2. In the self-check mode of operation, the controller 224 may open the switch 218 connecting the resistance R2 to the leak detection module 208 and close the switch 220 connecting the resistance R2 to ground. Thus, the test node 216 may be connected to ground via the resistance R2 to simulate a leak that causes the fluid to come into contact with the shield 206. Specifically, the resistance R2 may be in series with the impedance of the fluid, resulting in increased impedance perceived by the buffer 222. Due to the increased impedance, the amplitude of the output voltage signal may decrease as compared to the amplitude in the normal operation mode. In another embodiment, the system may perform a self-check by closing both switches 218, 220. In this embodiment, the input of the buffer may be connected to ground and may allow the system to validate that the switches 218, 220 are functioning properly.

In the normal operation mode, the controller 224 may close the switch 218 connecting the resistance R2 to the leak detection module 208 and open the switch 220 connecting the resistance R2 to ground. In the normal operation mode, and when there is no leak of the fluid, the resistance R2 may be connected in parallel with the impedance of the fluid and no substantial change in the impedance may be perceived by the buffer 222. Thus, the peak-to-peak voltage or the maximum voltage associated with the output voltage signal may maintain a substantially constant level. The test node 216 may be removed from the cable assembly 200 by opening both switches 218, 220.

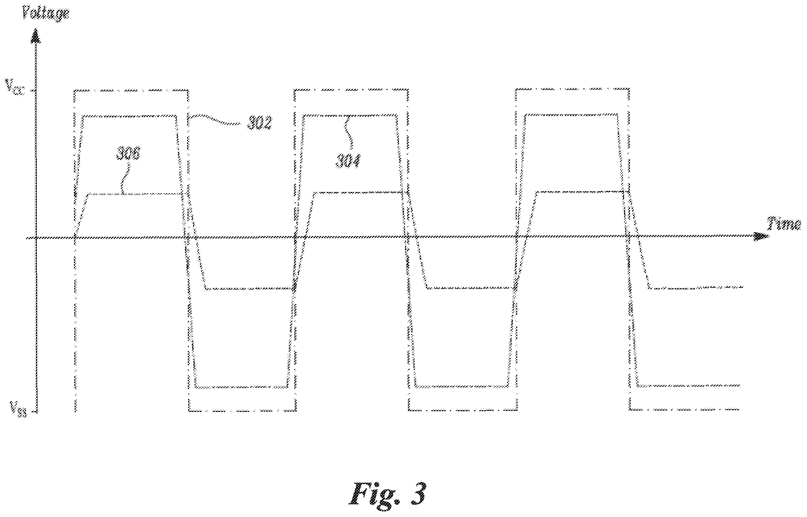

FIG. 3 illustrates the voltage signal waveforms in an example embodiment of the present disclosure. Waveform 302 depicts the input voltage signal generated by the power source 210. The waveform 302 may alternate between a maximum voltage (Vcc) and a minimum voltage (Vss). Waveform 304 shows the output voltage signal at the monitor nodes 212, 214 in the normal operation mode of the leak detection module 208 when there is no leak of the fluid. Waveform 306 shows the output voltage signal at the monitor nodes 212, 214 in the case of a leak. As described herein, the amplitude of the output voltage in a leak scenario may be smaller than the amplitude of the output voltage in a non-leak scenario. The leak detection module 208 may identify a leak when the measured amplitude drops by more than a predetermined threshold voltage drop. The threshold value may be chosen sufficiently high such that small variations in the peak-to-peak voltage are not detected as a leak of the fluid.

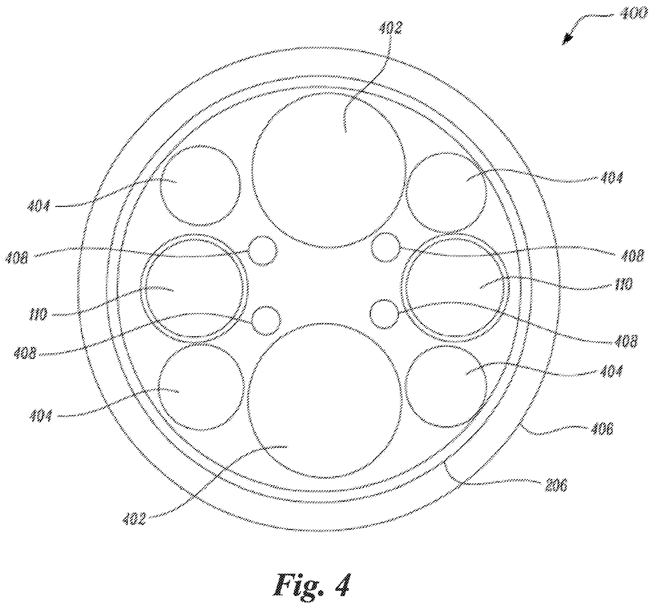

FIG. 4 illustrates an example cross-sectional view of a cable assembly 400 showing multiple sets of conductors 402, 404 and the cooling conduit 110 according to certain embodiments of the present disclosure. The cable assembly 400 may include high voltage conductors 402, low voltage conductors 404, and the cooling conduit 110, inside a shield 206.

The high voltage conductors 402 and the low voltage conductors 404 can have one or more insulating materials surrounding the outside of each to provide electric insulation. The cooling conduit 110 may have one or more channels inside to allow the fluid to flow in at least one direction. Generally, the cooling provided by the cooling conduit 110 may allow the cable 102 to be made with a smaller diameter of the outer jacket 406 than otherwise. Further, the cable assembly 400 may contain ground conductors 408 and one or more additional members, such as signal cables and/or filler material. The cable components are shown with a certain separation from each other for clarity, with the understanding that the components could completely fill the interior of the outer jacket 406 in some implementations.

As shown in FIG. 4, the cooling conduit 110 may be placed close to the conductors 402, 404. Accordingly, the cooling conduit 110 may provide cooling to each of the conductors 402, 404.

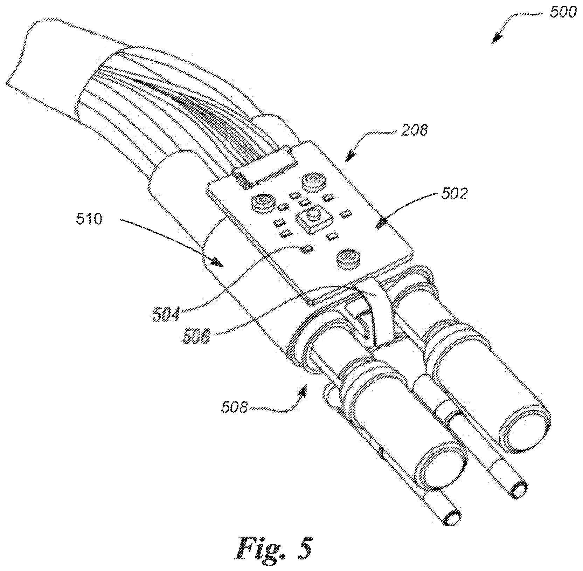

FIG. 5 shows an example of the leak detection module 208 resident within the connector 500. The leak detection module 208 may include a Printed Circuit Board Assembly (PCBA) 502 that is thermally coupled to the high voltage socket 508. In certain embodiments, the PCBA 502 is a two-part structure. A first part 504 of the PCBA may be coupled to the high voltage socket 508 such that the first part 504 of the PCBA sits on top of electrical sockets of the high voltage socket 508. A second part 506 of the PCBA may be connected to the first part 504 of the PCBA through a rigid-flex PCB construction, or other similar interconnects. The second part 506 of the PCBA may house auxiliary components, such as, but not limited to, thermistors for temperature sensing applications. The two-part structure of the PCBA 502 allows for more efficient routing of electrical wires to each high voltage socket 508. The PCBA 502 may include the various components of the leak detection module 208, such as the power source 210, the buffer 222, and the controller 224. In certain embodiments, the PCBA 502 may include one or more temperature sensors (not shown) for collecting temperature data associated with the cable assembly 200. In some embodiments, wings 510 may be present around the manifold. The wings 510 may be made of a conductive material and serve as increased ground connection area to detect leaks. The wings 510 may be part of the PCBA 502 but need not be. The location of the wings 510 may be selected based at least in part on where coolant is most likely to leak from or pool in a faulty charger assembly.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the scope of the appended claims. Accordingly, this description is to be considered as illustrative and is for the purpose of teaching those skilled in the art the manner of making and using various embodiments of the disclosed cable assembly. It is to be understood that the forms of disclosure herein shown and described are to be taken as representative embodiments. Equivalent elements, materials, processes or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense, and should in no way be construed as limiting of the present disclosure. All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer that two elements are directly connected to each other.

Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/ or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed or rendered as inoperable in certain cases, as is useful in accordance with a particular application. Additionally, any signal hatches in the drawings/figures should be considered only as exemplary, and not limiting, unless otherwise specifically specified.

## Claims

1. A cable assembly (200, 400) comprising:
a cable (102, 202) having a first end and a second end, the cable (102, 202) comprising an electric conductor (402, 404, 408) and a cooling conduit (110, 204), each of which extends from the first end to the second end, wherein the cooling conduit (110, 204) is adapted to convey a fluid that cools the electric conductor (402, 404, 408); and
a leak detection module (208) coupled to the cable (102, 202), the leak detection module (208) comprising:
a power source (210) to generate an input voltage signal (302) wherein the input voltage signal (302) is applied to the fluid at a first monitor node (212, 214) in contact with the fluid, the input voltage signal (302) being applied to the fluid through a resistance (R1); and
a controller (224) configured to monitor an output voltage signal (304, 306) at the first monitor node (212, 214) and to detect a leak of the fluid from the cooling conduit (110, 204) based on the output voltage signal (304, 306),
wherein the first monitor node (212, 214) is located within the cooling conduit (110, 204).

2. The cable assembly (200, 400) of claim 1, wherein the fluid is electrically conductive.

3. The cable assembly (200, 400) of claim 1, wherein the cooling conduit (110, 204) is configured to convey the fluid from the first end to the second end, and thereafter from the second end to the first end.

4. The cable assembly (200, 400) of claim 1, wherein the input voltage signal (302) is an alternating current (AC) voltage signal.

5. The cable assembly (200, 400) of claim 1, wherein the input voltage signal (302) is further applied at a second monitor node (212, 214) in contact with the fluid.

6. The cable assembly (200, 400) of claim 1, wherein the controller (224) detects the leak of the fluid when a peak-to-peak voltage of the output voltage signal (304, 306) drops more than a predetermined threshold voltage drop value.

7. The cable assembly (200, 400) of claim 1, wherein the controller (224) detects the leak of the fluid when a maximum voltage of the output voltage signal (304, 306) drops more than a predetermined threshold maximum voltage value.

8. The cable assembly (200, 400) of claim 1, wherein the controller (224) further provides, upon detecting the leak of the fluid, at least one of: a visual indication, an audio indication, or a tactile indication.

9. The cable assembly (200, 400) of any one of the preceding claims further comprising a connector (500) attached to the second end of the cable (102, 202), wherein the cooling conduit (110, 204) forms a fluid channel around an interior of a handle of the connector (500).

10. The cable assembly (200, 400) of claim 9, wherein the cooling conduit (110, 204) is adapted to cool the connector (500) and the leak detection module (208) is coupled to the connector (500).

11. The cable assembly (200, 400) of any one of the preceding claims, wherein the cable assembly (200, 400) is used for charging an electric vehicle from a power supply.

12. The cable assembly (200, 400) of claim 11, wherein the controller (224), upon detecting the leak of the fluid, automatically stops charging of the electric vehicle.

13. The cable assembly (200, 400) of any one of the preceding claims, further comprising switches (218, 220) connected to a test node (216), wherein the test node (216) is in contact with the fluid and wherein the switches (218, 220) are configurable to simulate the leak of the fluid via a resistance (R2) by allowing the resistance (R2) to alternate connection between the leak detection module (208) and ground.

## Patentansprüche

1. Kabelanordnung (200, 400), aufweisend:
ein Kabel (102, 202) mit einem ersten Ende und einem zweiten Ende, wobei das Kabel (102, 202) einen elektrischen Leiter (402, 404, 408) und eine Kühlleitung (110, 204) aufweist, die sich jeweils vom ersten Ende zum zweiten Ende erstrecken, wobei die Kühlleitung (110, 204) dazu ausgelegt ist, ein Fluid zu befördern, das den elektrischen Leiter (402, 404, 408) kühlt; und
ein Leckerkennungsmodul (208), das mit dem Kabel (102, 202) gekoppelt ist, wobei das Leckerkennungsmodul (208) Folgendes aufweist:
eine Stromquelle (210), um ein Eingangsspannungssignal (302) zu erzeugen, wobei das Eingangsspannungssignal (302) an einem ersten Überwachungsknoten (212, 214), der mit dem Fluid in Kontakt steht, an das Fluid angelegt wird, wobei das Eingangsspannungssignal (302) über einen Widerstand (R1) an das Fluid angelegt wird; und
eine Steuerung (224), die dazu eingerichtet ist, ein Ausgangsspannungssignal (304, 306) am ersten Überwachungsknoten (212, 214) zu überwachen und basierend auf dem Ausgangsspannungssignal (304, 306) ein Leck des Fluids aus der Kühlleitung (110, 204) zu erkennen,
wobei sich der erste Überwachungsknoten (212, 214) innerhalb der Kühlleitung (110, 204) befindet.

2. Kabelanordnung (200, 400) nach Anspruch 1, wobei das Fluid elektrisch leitfähig ist.

3. Kabelanordnung (200, 400) nach Anspruch 1, wobei die Kühlleitung (110, 204) dazu eingerichtet ist, das Fluid vom ersten Ende zum zweiten Ende and anschließend vom zweiten Ende zum ersten Ende zu befördern.

4. Kabelanordnung (200, 400) nach Anspruch 1, wobei das Eingangsspannungssignal (302) ein Wechselstrom (AC)-Spannungssignal ist.

5. Kabelanordnung (200, 400) nach Anspruch 1, wobei das Eingangsspannungssignal (302) ferner an einem zweiten Überwachungsknoten (212, 214), der mit dem Fluid in Kontakt steht, angelegt wird.

6. Kabelanordnung (200, 400) nach Anspruch 1, wobei die Steuerung (224) das Leck des Fluids erkennt, wenn eine Spitze-Spitze-Spannung des Ausgangsspannungssignals (304, 306) um mehr als einen vorbestimmten Schwellenwert für den Spannungsabfallwert abfällt.

7. Kabelanordnung (200, 400) nach Anspruch 1, wobei die Steuerung (224) das Leck des Fluids erkennt, wenn eine Maximalspannung des Ausgangsspannungssignals (304, 306) um mehr als einen vorbestimmten Schwellenwert für den Maximalspannungswert abfällt.

8. Kabelanordnung (200, 400) nach Anspruch 1, wobei die Steuerung (224) ferner beim Erkennen des Lecks des Fluids mindestens eines von Folgendem bereitstellt: eine visuelle Anzeige, eine akustische Anzeige oder eine haptische Anzeige.

9. Kabelanordnung (200, 400) nach einem der vorhergehenden Ansprüche, die ferner einen Steckverbinder (500) aufweist, der an dem zweiten Ende des Kabels (102, 202) angebracht ist, wobei die Kühlleitung (110, 204) einen Fluidkanal um das Innere eines Griffs des Steckverbinders (500) herum bildet.

10. Kabelanordnung (200, 400) nach Anspruch 9, wobei die Kühlleitung (110, 204) dazu ausgelegt ist, den Steckverbinder (500) zu kühlen, und das Leckerkennungsmodul (208) mit dem Steckverbinder (500) gekoppelt ist.

11. Kabelanordnung (200, 400) nach einem der vorhergehenden Ansprüche, wobei die Kabelanordnung (200, 400) verwendet wird, um ein Elektrofahrzeug aus einer Stromquelle zu laden.

12. Kabelanordnung (200, 400) nach Anspruch 11, wobei die Steuerung (224) beim Erkennen des Lecks des Fluids das Laden des Elektrofahrzeugs automatisch stoppt.

13. Kabelanordnung (200, 400) nach einem der vorhergehenden Ansprüche, die ferner Schalter (218, 220) umfasst, die mit einem Prüfknoten (216) verbunden sind, wobei der Prüfknoten (216) mit dem Fluid in Kontakt steht, und wobei die Schalter (218, 220) dazu eingerichtet werden können, das Leck des Fluids über einen Widerstand (R2) zu simulieren, indem dem Widerstand (R2) ermöglicht wird, sich abwechselnd mit dem Leckerkennungsmodul (208) und Masse zu verbinden.

## Revendications

1. Un ensemble de câbles (200, 400) comprenant :
un câble (102, 202) ayant une première extrémité et une seconde extrémité, le câble (102, 202) comprenant un conducteur électrique (402, 404, 408) et un conduit de refroidissement (110, 204), chacun desquels s'étend de la première extrémité à la seconde extrémité, dans lequel le conduit de refroidissement (110, 204) est adapté à acheminer un fluide qui refroidit le conducteur électrique (402, 404, 408) ; et
un module de détection de fuite (208) couplé au câble (102, 202), le module de détection de fuite (208) comprenant :
une source d'alimentation (210) pour générer un signal de tension d'entrée (302), dans laquelle le signal de tension d'entrée (302) est appliqué au fluide à un nœud de surveillance (212, 214) en contact avec le fluide, le signal de tension d'entrée (302) étant appliqué au fluide à travers une résistance (R1) ; et
un contrôleur (224) configuré pour surveiller un signal de tension de sortie (304, 306) au niveau du nœud de surveillance (212, 214) et pour détecter une fuite du fluide à partir du conduit de refroidissement (110, 204) sur la base du signal de tension de sortie (304, 306),
dans lequel le nœud de surveillance (212, 214) est situé à l'intérieur du conduit de refroidissement (110, 204).

2. L'ensemble de câbles (200, 400) selon la revendication 1, dans lequel le fluide est électroconducteur.

3. L'ensemble de câbles (200, 400) selon la revendication 1, dans lequel le conduit de refroidissement (110, 204) est configuré pour acheminer le fluide de la première extrémité à la seconde extrémité, puis de la seconde extrémité à la première extrémité.

4. L'ensemble de câbles (200, 400) selon la revendication 1, dans lequel le signal de tension d'entrée (302) est un signal de tension alternative (CA).

5. L'ensemble de câbles (200, 400) selon la revendication 1, dans lequel le signal de tension d'entrée (302) est en outre appliqué à un second nœud de surveillance (212, 214) en contact avec le fluide.

6. L'ensemble de câbles (200, 400) selon la revendication 1, dans lequel le contrôleur (224) détecte la fuite du fluide lorsqu'une tension crête à crête du signal de tension de sortie (304, 306) chute de plus qu'une valeur prédéterminée de seuil de chute de tension.

7. L'ensemble de câbles (200, 400) selon la revendication 1, dans lequel le contrôleur (224) détecte la fuite du fluide lorsqu'une tension maximale du signal de tension de sortie (304, 306) chute de plus qu'une valeur prédéterminée de seuil de tension maximale.

8. L'ensemble de câbles (200, 400) selon la revendication 1, dans lequel le contrôleur (224) fournit en outre, lorsqu'il détecte la fuite du fluide, au moins l'une des indications suivantes : une indication visuelle, une indication sonore ou une indication tactile.

9. L'ensemble de câbles (200, 400) selon l'une quelconque des revendications précédentes, comprenant en outre un connecteur (500) fixé à la seconde extrémité du câble (102, 202), dans lequel le conduit de refroidissement (110, 204) forme un canal de fluide autour d'un intérieur d'une poignée du connecteur (500).

10. L'ensemble de câbles (200, 400) selon la revendication 9, dans lequel le conduit de refroidissement (110, 204) est adapté à refroidir le connecteur (500) et le module de détection de fuite (208) est couplé au connecteur (500).

11. L'ensemble de câbles (200, 400) selon l'une quelconque des revendications précédentes, dans lequel l'ensemble de câbles (200, 400) est utilisé pour la charge d'un véhicule électrique à partir d'une alimentation électrique.

12. L'ensemble de câbles (200, 400) selon la revendication 11, dans lequel le contrôleur (224), lorsqu'il détecte la fuite du fluide, arrête automatiquement la charge du véhicule électrique.

13. L'ensemble de câbles (200, 400) selon l'une quelconque des revendications précédentes, comprenant en outre des commutateurs (218, 220) connectés à un nœud de test (216), dans lequel le nœud de test (216) est en contact avec le fluide et dans lequel les commutateurs (218, 220) sont configurables pour simuler la fuite du fluide via une résistance (R2) en permettant à la résistance (R2) d'alterner la connexion entre le module de détection de fuite (208) et la masse.
